# EUROPEAN PATENT APPLICATION

(11) **EP 3 480 961 A1**
(43) Date of publication of application: **08.05.2019**
(21) Application number: 17819289.4
(22) Date of filing: 29.06.2017
(51) Int. Cl.: H04B 1/00

(54) **RADIO FREQUENCY CIRCUIT AND MOBILE TERMINAL**

(30) Priority: 30.06.2016 CN 201610512020
(71) Applicant: Vivo Mobile Communication Co., Ltd., Dongguan, Guangdong 523860 (CN)
(72) Inventor: XIONG, Jun, Dongguan Guangdong 523860 (CN)
(74) Representative: Isarpatent
(86) International application number: PCT/CN2017/090702
(87) International publication number: WO 2018/001292

(57) **Abstract**

The present disclosure provides an RF circuit for a mobile termnal having an antenna, and the mobile terminal. The RF circuit includes: a first frontend network configured to, after communicating with the antenna, form a first transmission link with the antenna for sending and receiving signals at a first frequency band; a second frontend network configured to, after communicating with the antenna, form a second transmission link with the antenna for sending and receiving signals at a second frequency band; a switching unit, one end of which is connected to the first frontend network and the second frontend network, and the other end of which is connected to the antenna; and a control unit configured to control the switching unit to enable the first transmission link and/or the second transmission link in accordance with an operating mode of the RF circuit.

## Description

### CROSS-REFERENCE TO RELATED APPLICATION

The present application claims a priority of the Chinese patent application No.201610512020.6 filed on June 30, 2016, which is incorporated herein by reference in its entirety.

### TECHNICAL FIELD

The present disclosure relates to the field of communication technology, in particular to a radio frequency (RF) circuit and a mobile terminal.

### BACKGROUND

Along with the explosive growth of data services, a broadband network for mobile communication needs to evolve, so as to meet the requirements on user experiences when a novel service is used by a user. As the most efficient way for increasing throughput of a mobile communication network, carrier aggregation (CA) is adopted so as to acquire a wider communication bandwidth. The advantage of the CA over the user experience and the user experience-based network capacity has been verified through a mature Long Term Evolution (LTE) network. Almost all leading LTE operators are actively involved in the deployment of the CA, so as to use the limited spectrum resources as possible in an aggregation manner, thereby to increase the network throughput.

There mainly exist two LTE modes, i.e., Time-Division Duplexing (TDD) and Frequency-Division Duplexing (FDD) modes. For the TDD-LTE mode, a duplexer is adopted so as to achieve the CA at two frequency bands B39 and B41, while for the FDD-LTE mode, a quadruplexer is adopted so s to achieve the CA at two frequency bands B1 and B3. In the above two LTE modes, when an RF circuit operates in a CA mode, it is necessary for a power amplifier to provide large power. However, when the RF circuit operates in a non-CA mode and the large transmission power is still provided by the power amplifier, the power consumption may be too large and wasteful, i.e., there is such a problem as large power consumption for the RF circuit.

### SUMMARY

An object of the present disclosure is to provide an RF circuit and a mobile terminal, so as to reduce the power consumption of the RF circuit.

In one aspect, the present disclosure provides in some embodiments an RF circuit for a mobile terminal having an antenna, including: a first frontend network configured to, after communicating with the antenna, form a first transmission link with the antenna for sending and receiving signals at a first frequency band; a second frontend network configured to, after communicating with the antenna, form a second transmission link with the antenna for sending and receiving signals at a second frequency band; a switching unit, one end of which is connected to the first frontend network and the second frontend network, and the other end of which is connected to the antenna; and a control unit configured to control the switching unit to enable the first transmission link and/or the second transmission link in accordance with an operating mode of the RF circuit.

In another aspect, the present disclosure provides in some embodiments a mobile terminal, including an RF processor, an antenna and an RF circuit. The RF processor is connected to the antenna via the RF circuit. The RF circuit includes: a first frontend network connected to the RF processor and configured to, after communicating with the antenna, form a first transmission link with the antenna for sending and receiving signals at a first frequency band; a second frontend network connected to the RF processor and configured to, after communicating with the antenna, form a second transmission link with the antenna for sending and receiving signals at a second frequency band; a switching unit, one end of which is connected to the first frontend network and the second frontend network, and the other end of which is connected to the antenna; and a control unit configured to control the switching unit to enable the first transmission link and/or the second transmission link in accordance with an operating mode of the RF circuit.

According to the embodiments of the present disclosure, one end of the switching unit is connected to the first frontend network and the second frontend network, and the other end is connected to the antenna. The control unit controls the switching unit to enable the first transmission link and/or the second transmission link in accordance with the operating mode of the RF circuit. As a result, it is able to prevent the RF circuit to output large transmission power in a non-CA mode, thereby to reduce the power consumption of the RF circuit.

### BRIEF DESCRIPTION OF THE DRAWINGS

FIG. 1 is a schematic view showing an RF circuit according to some embodiments of the present disclosure;
FIG. 2 is another schematic view showing the RF circuit according to some embodiments of the present disclosure;
FIG. 3 is a schematic view showing the RF circuit in a FDD mode according to some embodiments of the present disclosure;
FIG. 4 is a schematic view showing the RF circuit in a TDD mode according to some embodiments of the present disclosure;
FIG. 5 is a schematic view showing a mobile terminal according to some embodiments of the present disclosure; and
FIG. 6 is a schematic view showing an RF unit according to some embodiments of the present disclosure.

### DETAILED DESCRIPTION OF THE EMBODIMENTS

In order to make the objects, the technical solutions and the advantages of the present disclosure more apparent, the present disclosure will be described hereinafter in a clear and complete manner in conjunction with the drawings and embodiments. Obviously, the following embodiments merely relate to a part of, rather than all of, the embodiments of the present disclosure, and based on these embodiments, a person skilled in the art may, without any creative effort, obtain the other embodiments, which also fall within the scope of the present disclosure.

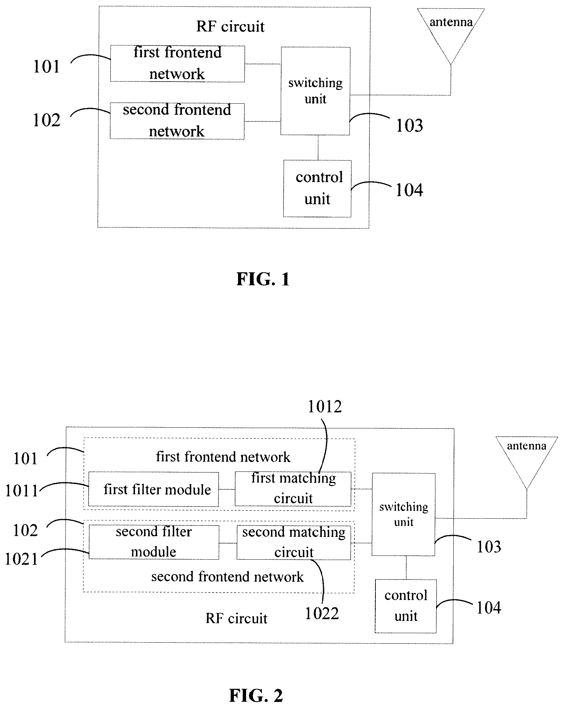

Referring to FIG. 1, the present disclosure provides in some embodiments an RF circuit for a mobile terminal having an antenna. The RF circuit may include a first frontend network 101, a second frontend network 102, a switching unit 103 and a control unit 104.

The first frontend network 101 is configured to, after communicating with the antenna, form a first transmission link with the antenna for sending and receiving signals at a first frequency band.

As prescribed by the 3^{rd}-Generation Partnership Protocol (3GPP), frequencies for a Long Term Evolution (LTE) system include FDD frequency bands and TDD frequency bands. The FDD frequency bands include band1 through band21, and the TDD frequency bands include band33 through band41. The first frequency band may be any one of the FDD frequency bands and the TDD frequency bands.

After communicating with the antenna, the first frontend network 101 may form the first transmission link with the antenna, so as to receive and send the signals at the first frequency band. In addition, the first frontend network 101 is capable of performing such processings as amplification, frequency segmentation, frequency combination and impedance matching on the signal in the first transmission link. For example, the first frontend network 101 may include a filter module so as to perform frequency segmentation and frequency combination on the signals at the first frequency band in the first transmission link, or include a matching circuit so as to perform impedance matching on the first transmission link. Functions and structures of the first frontend network 101 will not be particularly defined herein.

The second frontend network 102 is configured to, after communication with the antenna, form a second transmission link with the antenna for sending and receiving signals at a second frequency band.

The second frequency band is a frequency band of the FDD frequency bands or the TDD frequency bands different from the first frequency band. For example, when the first frequency band is band1 of the FDD frequency bands, the second frequency band may be band3 or any frequency band other than band1. Of course, the first frequency band and the second frequency band may be two different frequency bands in the FDD frequency bands or the TDD frequency bands, or one frequency band in the FDD frequency bands and one frequency band in the TDD frequency bands.

After communicating with the antenna, the second frontend network 102 may form the second transmission link with the antenna, so as to receive and send the signals at the second frequency bands. In addition, the second frontend network 102 is capable of performing such processings as amplification, frequency division, frequency combination and impedance matching on the signal in the second transmission link. For example, the second frontend network 102 may include a filter module so as to perform frequency segmentation and frequency combination on the signals at the second frequency band in the second transmission link, or include a matching circuit so as to perform impedance matching on the second transmission link. Functions and structures of the second frontend network 102 will not be particularly defined herein.

One end of the switching unit 103 is connected to the first frontend network 101 and the second frontend network 102, and the other end thereof is connected to the antenna.

When one end of the switching unit 103 is connected to the first frontend network 101 and the second frontend network 102 and the other end thereof is connected to the antenna, the switching unit 103 is capable of controlling the first frontend network 101 and the second frontend network 102 to communicate with the antenna in accordance with an operating mode of the RF circuit, so as to enable or disenable the first transmission link and/or the second transmission link.

In the embodiments of the present disclosure, the operating mode of the RF circuit includes a CA mode and a non-CA mode. When the RF circuit operates in the CA mode, the switching unit 103 may be configured to enable the first transmission link and the second transmission link simultaneously, so as to send and receive the signals at the first frequency band and the second frequency band simultaneously. When the RF circuit operates in the non-CA mode, the switching unit 103 may be configured to enable the first transmission link or the second transmission link, i.e., enable one of the two transmission links and disenable the other, so as to send and receive the signals at one of the two frequency bands. In other words, when the RF circuit operates in the non-CA mode, merely the frontend network corresponding to the frequency band is in an active state, so as to reduce the transmission power, thereby to prevent the RF circuit to output the large transmission power continuously.

The switching unit 103 may be any assembly capable of enabling or disenabling the transmission link between the antenna and each of the first frontend network 101 and the second frontend network 102. For example, the switching unit 103 may include a plurality of single-pole single-throw switches or one multi-pole multi-throw switch.

The control unit 104 is configured to control the switching unit 103 in accordance with the operating mode of the RF circuit, so as to enable the transmission link between the antenna and the first frontend network 101 and/or the second frontend network 102.

In a possible embodiment of the present disclosure, the control unit 104 is further configured to, when the RF circuit operates in the CA mode, control the switching unit to enable the first transmission link and the second transmission link, and when the RF circuit operates in the non-CA mode, control the switching unit to enable the first transmission link or the second transmission link.

The control unit 104 may include one processor or controller selected from the group consisting of Central Processing Unit (CPU), Single Chip Microcomputer (SCM), Field-Programmable Gate Array (FPGA), Complex Programmable Logic Device (CPLD), System on Chip (SoC) or Advanced Reduced Instruction-Set Computer (RISC) Machine (ARM), or a combination thereof.

It should be appreciated that, the above description is merely given by taking the RF circuit capable of achieving the carrier aggregation at two different frequency bands, i.e., the RF circuit including the first frontend network and the second frontend network, as an example. Actually, the RF circuit may be adopted to achieve the carrier aggregation at N number of different frequency bands, i.e., it may include N number of frontend networks, where N is an integer greater than or equal to 2. A principle of the RF circuit capable of achieving the carrier aggregation at N number of different frequency bands is the same as that of the RC circuit capable of achieving the carrier aggregation at two different frequency bands, and thus will not be particularly defined herein.

According to the embodiments of the present disclosure, one end of the switching unit 103 is connected to the first frontend network 101 and the second frontend network 102, and the other end is connected to the antenna. The control unit 103 controls the switching unit in accordance with the operating mode of the RF circuit, so as to enable the first transmission link and/or the second transmission link. As a result, it is able to prevent the RF circuit to output large transmission power in the non-CA mode, thereby to reduce the power consumption of the RF circuit.

Referring to FIG. 2, the present disclosure provides in some embodiments an RF circuit for a mobile terminal having an antenna. The RF circuit may include a first frontend network 101, a second frontend network 102, a switching unit 103 and a control unit 104. The first frontend network 101 is configured to, after communicating with the antenna, form a first transmission link with the antenna for sending and receiving signals at a first frequency band. The second frontend network 102 is configured to, after communicating with the antenna, form a second transmission link with the antenna for sending and receiving signals at a second frequency band.

As prescribed by the 3GPP, frequencies for an LTE system include FDD frequency bands and TDD frequency bands. The FDD frequency bands include band 1 through band21, and the TDD frequency bands include band33 through band41. The first frequency band may be any one of the FDD frequency bands and the TDD frequency bands. For example, the first frequency band may be band1 of the FDD frequency bands or band39 of the TDD frequency bands.

In a possible embodiment of the present disclosure, the first frontend network 101 includes a first filter module 1011, the second frontend network 102 includes a second filter module 1021, and the switching unit 103 is connected to the first filter module 1011 and the second filter module 1021.

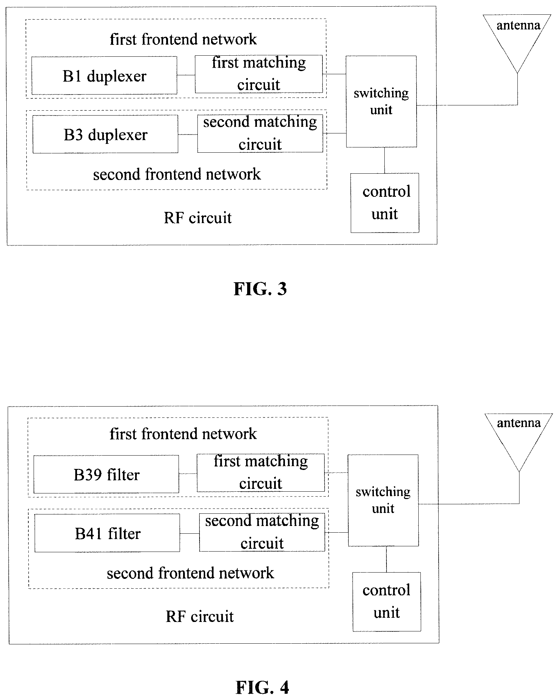

The first filter module 1011 and the second filter module 1021 may be configured to perform frequency division and frequency combination on the signals at the first frequency band and the second frequency band respectively. The two filter modules may each be a filter capable of performing the frequency division and the frequency combination on the signal in the transmission link. For example, as shown in FIG. 3, the first filter module 1011 is a B1 duplexer capable of receiving and sending signals at band1 and performing the frequency division and the frequency combination, and the second filter module 1021 is a B3 duplexer capable of receiving and sending signals at band3 and performing the frequency division and the frequency combination, and the second filter. In this way, when the RF circuit operates in an FDD mode, it is able to achieve the carrier aggregation on the signals at band1 and band3. For another example, as shown in FIG. 4, the first filter module 1011 is a B39 filter capable of receiving and sending signals at band39 and performing the frequency division and the frequency combination, and the second filter module 1021 is a B41 filter capable of receiving and sending signals at band41 and performing the frequency division and the frequency combination, and the second filter. Both the B39 filter and the B41 filter are surface acoustic wave filters. In this way, when the RF circuit operates in a TDD mode, it is able to achieve the carrier aggregation on the signals at band39 and band41.

In a possible embodiment of the present disclosure, the first frontend network 101 may include the first filter module 1011 and a first matching circuit 1012, the second frontend network 102 may include the second filter module 1021 and a second matching circuit 1022, and the first filter module 1011 and the second filter module 1021 are connected to the switching unit 103 through the first matching circuit 1012 and the second matching circuit 1022 respectively.

In order to prevent each transmission link at its own frequency band from interfering with the other transmission link and reduce the power consumption of the RF circuit in the CA mode, the first matching circuit 1012 is configured to perform basic impedance matching on the first transmission link at the first frequency band, and perform open-circuit impedance matching at the second frequency band. The second matching circuit 1022 is configured to perform open-circuit impedance matching on the second transmission link at the first frequency band, and perform basic impedance matching at the second frequency band. For example, the first matching circuit 1012 may be configured to match a basic impedance of 50Ω for the first transmission link at the first frequency band, and match basic open-circuit impedance for the first transmission link at the second frequency band, so as to provide the first transmission link with high impedance. Identically, the second matching circuit 1022 may be configured to match a basic impedance of 50Ω for the second transmission link at the second frequency band, and match basic open-circuit impedance for the second transmission link at the first frequency band, so as to provide the second transmission link with high impedance.

In a possible embodiment of the present disclosure, the first filter module 1011 and the second filter module 1021 may each be a duplexer or a surface acoustic wave filter.

To be specific, the first filter module 1011 and the second filter module 1021 may be duplexers or surface acoustic wave filters, or one of them may be a duplexer or the other may be a surface acoustic wave filter, which will not be particularly defined herein.

One end of the switching unit 103 is connected to the first frontend network 101 and the second frontend network 102, and the other end thereof is connected to the antenna.

The switching unit 103 may be any assembly capable of enabling or disenabling the first transmission link and the second transmission link. For example, the switching unit 103 may include a plurality of single-pole single-throw switches or one multi-pole multi-throw switch. To be specific, a double-pole double-throw switch may be adopted so as to control the transmission links for sending and receiving the signals at the first frequency band and the second frequency band.

The control unit 104 is configured to control the switching unit 103 in accordance with the operating mode of the RF circuit, so as to enable the first transmission link and/or the second transmission link.

The control unit 104 may control the switching unit 103 in accordance with the operating mode of the RF circuit. For example, when the RF circuit operates in the CA mode, the control unit 104 may control the switching unit 103 to enable the first transmission link and the second transmission link, so as to receive and send the signals at both the first frequency band and the second frequency band. When the RF circuit operates in the non-CA mode, the control unit 104 may control the switching unit 103 to enable one of the first transmission link and the second transmission link and disenable the other, so as to receive and send the signals at the first frequency band or the second frequency band.

According to the embodiments of the present disclosure, one end of the switching unit 103 is connected to the first filter module 1011 of the first frontend network 101 and the second filter module 1021 of the second frontend network 102, and the other end thereof is connected to the antenna. The control unit 104 controls the switching unit in accordance with the operating mode of the RF circuit, so as to enable the transmission links between the antenna and the first frontend network 101 and/or the second frontend network 102. As a result, it is able to prevent the RF circuit from outputting large transmission power continuously, thereby to reduce the power consumption of the RF circuit. In addition, the switching unit 103 is connected to the first filter module 1011 and the second filter module 1021 through the first matching circuit 1012 and the second matching circuit 1022 respectively, so as to prevent the interference between the transmission links, thereby to further reduce the power consumption of the RF circuit.

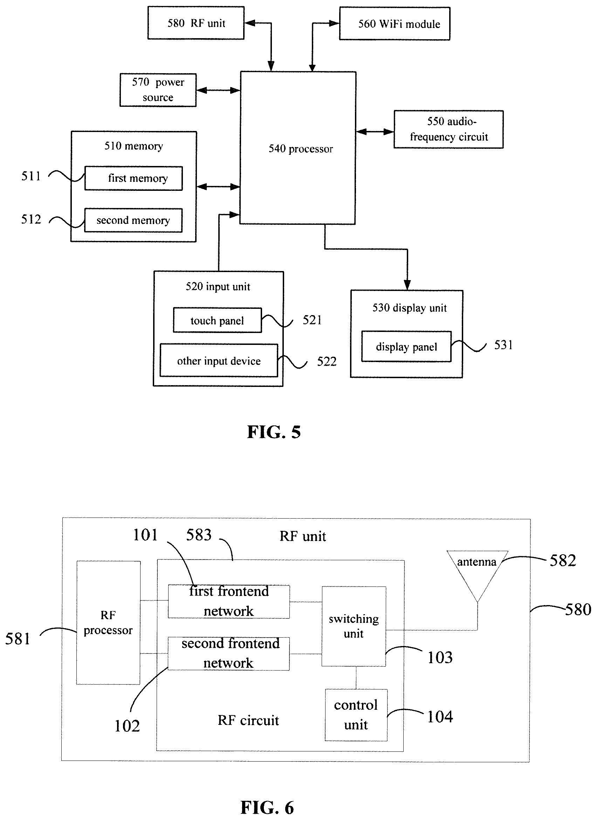

As shown in FIG. 5, the present disclosure further provides in some embodiments a mobile terminal. The mobile terminal may be a mobile phone, a flat-panel computer, a Personal Digital Assistant (PDA) or a vehicle-mounted computer.

The mobile terminal may include a memory 510, an input unit 520, a display unit 530, a processor 540, an audio-frequency circuit 550, a Wireless Fidelity (WiFi) module 560, a power source 570 and an RF unit 580.

In a possible embodiment of the present disclosure, the memory 510 may include a volatile memory or a nonvolatile memory, or both. The nonvolatile memory may be a Read-Only Memory (ROM), a Programmable ROM (PROM), an Erasable PROM (EPROM), an Electrically EPROM (EEPROM) or a flash memory. The volatile memory may be a Random Access Memory (RAM), which serves as an external high-speed cache. Illustratively but nonrestrictively, various RAMs may be adopted, e.g., Static RAM (SRAM), Dynamic RAM (DRAM), Synchronous DRAM (SDRAM), Double Data Rate SDRAM (DDRSDRAM), Enhanced SDRAM (ESDRAM), Synchronous Link DRAM (SLDRAM) and Direct Rambus RAM (DRRAM).

The input unit may be configured to receive digital or character information from a user, and generate signal input associated with user settings and function control of the mobile terminal. To be specific, in a possible embodiment of the present disclosure, the input unit 520 may include a touch panel 531 (also called as a touch screen) capable of determining a touch operation made on or in proximity to the touch panel (e.g., a touch operation made by a finger of the user, or any other appropriate object or accessory such as stylus on the touch panel 531) and driving a corresponding connection devices in accordance with a predetermined program. In a possible embodiment of the present disclosure, the touch panel 531 may include a touch detection unit and a touch controller .The touch detection unit is configured to detect a touch position, detect a signal generated due to the touch operation, and transmit the signal to the touch controller. The touch controller is configured to acquire touch information from the touch detection unit, convert it into coordinates of a touch point, transmit the coordinates to the processor 540, and receive and execute an instruction from the processor 540. In addition, the touch panel 531 may be of a resistive type, a capacitive type, an infrared type or a surface acoustic wave type. Apart from the touch panel 531, the input unit 520 may further include any other input device 532, which includes, but not limited to, one or more of a physical keyboard, a functional button (e.g., a volume control button or a switching button), a trackball, a mouse and a joystick.

The display unit 530 is configured to display information inputted by the user or information to be presented to the user, and various interfaces for the mobile terminal. The display unit 530 may include a display panel 541. In a possible embodiment of the present disclosure, a liquid crystal display (LCD) panel or an organic light-emitting diode (OLED) panel may be adopted.

It should be appreciated that, the touch panel 531 may cover the display panel 541, so as to form a touch display panel. When the touch operation made on or in proximity to the touch display panel has been detected, the touch information may be transmitted to the processor 540 so as to determine a type of a touch event. Then, the processor 540 may provide corresponding visual output on the touch display panel in accordance with the type of the touch event.

The touch display panel includes an application interface display region and a commonly-used controls display region. An arrangement mode of the two display regions will not be particularly defined herein, e.g., one of the two display regions may be arranged above or under the other, or arranged to the left or the right of the other. The application interface display region may be configured to display interfaces for applications, and each interface may include an icon for at least one application and/or an interface element such as desktop control. The application interface display region may also be a blank interface where no content is contained. The commonly-used controls display region is configured to display controls which are used frequently, e.g., setting button, interface number, scroll bar, or such application icons as telephone book icon.

The processor 540 is a control center of the mobile terminal, and connected to each member of the entire mobile terminal via various interfaces and lines. The processor 540 is configured to run or execute software programs and/or modules stored in a first memory 511, and call data stored in a second memory 512, so as to achieve various functions of the mobile terminal and process the data, thereby to monitor the mobile terminal. In a possible embodiment of the present disclosure, the processor 540 may include one or more processing units.

As shown in FIG. 6, the RF unit 580 includes an RF processor 581, an antenna 582 and an RF circuit 583. The RF processor 581 is connected to the antenna 582 via the RF circuit 583. The RF circuit 583 includes: a first frontend network 101 connected to the RF processor 581 and configured to, after communicating with the antenna 582, form a first transmission link with the antenna 582 for sending and receiving signals at a first frequency band; a second frontend network 102 connected to the RF processor 581 and configured to, after communicating with the antenna 582, form a second transmission link with the antenna 582 for sending and receiving signals at a second frequency band; a switching unit 103, one end of which is connected to the first frontend network 101 and the second frontend network 102, and the other end of which is connected to the antenna 582; and a control unit 104 configured to control the switching unit 103 in accordance with an operating mode of the RF circuit 583, so as to enable the first transmission link and/or the second transmission link.

In a possible embodiment of the present disclosure, the first frontend network 101 includes a filter module, the second frontend network 102 includes a second filter module, and the switching unit is connected to the first filter module and the second filter module.

In a possible embodiment of the present disclosure, the first frontend network 101 includes a first filter module and a first matching circuit, the second frontend network 102 includes a second filter module and a second matching circuit, and the first filter module and the second filter module are connected to the switching unit through the first matching circuit and the second matching circuit respectively.

In a possible embodiment of the present disclosure, the first filter module and the second filter module may each be a duplexer or a surface acoustic wave filter.

In a possible embodiment of the present disclosure, the control unit 104 is configured to, when the RF circuit operates in a CA mode, control the switching unit 103 to enable the first transmission link and the second transmission link, and when the RF circuit operates in a non-CA mode, control the switching unit 103 to enable the first transmission link or the second transmission link.

The above embodiments are for illustrative purposes only, but the present disclosure is not limited thereto. Obviously, a person skilled in the art may make further modifications and improvements without departing from the spirit of the present disclosure, and these modifications and improvements shall also fall within the scope of the present disclosure.

## Claims

1. A Radio Frequency (RF) circuit for a mobile terminal having an antenna, comprising:
a first frontend network configured to, after communicating with the antenna, form a first transmission link with the antenna for sending and receiving signals at a first frequency band;
a second frontend network configured to, after communicating with the antenna, form a second transmission link with the antenna for sending and receiving signals at a second frequency band;
a switching unit, one end of which is connected to the first frontend network and the second frontend network, and the other end of which is connected to the antenna; and
a control unit configured to control the switching unit in accordance with an operating mode of the RF circuit, so as to enable the first transmission link and/or the second transmission link.

2. The RF circuit according to claim 1, wherein the first frontend network comprises a first filter module, the second frontend network comprises a second filter module, and the switching unit is connected to the first filter module and the second filter module.

3. The RF circuit according to claim 1, wherein the first frontend network comprises a first filter module and a first matching circuit corresponding to the first frequency band, the second frontend network comprises a second filter module and a second matching circuit corresponding to the second frequency band, the first filter module and the second filter module are connected to the switching unit through the first matching circuit and the second matching circuit respectively.

4. The RF circuit according to claim 2 or 3, wherein the first filter module and the second filter module are each a duplexer or a surface acoustic wave filter.

5. The RF circuit according to claim 1, wherein the control unit is further configured to, when the RF circuit operates in a Carrier Aggregation (CA) mode, control the switching unit to enable the first transmission link and the second transmission link, and when the RF circuit operates in a non-CA mode, control the switching module to enable the first transmission link or the second transmission link.

6. A mobile terminal, comprising a Radio Frequency (RF) processor, an antenna and an RF circuit, wherein the RF processor is connected to the antenna via the RF circuit,
wherein the RF circuit comprises:
a first frontend network connected to the RF processor and configured to, after communicating with the antenna, form a first transmission link with the antenna for sending and receiving signals at a first frequency band;
a second frontend network connected to the RF processor and configured to, after communicating with the antenna, form a second transmission link with the antenna for sending and receiving signals at a second frequency band;
a switching unit, one end of which is connected to the first frontend network and the second frontend network, and the other end of which is connected to the antenna; and
a control unit configured to control the switching unit in accordance with an operating mode of the RF circuit, so as to enable the first transmission link and/or the second transmission link.

7. The mobile terminal according to claim 6, wherein the first frontend network comprises a first filter module, the second frontend network comprises a second filter module, and the switching unit is connected to the first filter module and the second filter module.

8. The mobile terminal according to claim 7, wherein the first frontend network comprises a first filter module and a first matching circuit corresponding to the first frequency band, the second frontend network comprises a second filter module and a second matching circuit corresponding to the second frequency band, the first filter module and the second filter module are connected to the switching unit through the first matching circuit and the second matching circuit respectively.

9. The mobile terminal according to claim 7 or 8, wherein the first filter module and the second filter module are each a duplexer or a surface acoustic wave filter.

10. The mobile terminal according to claim 6, wherein the control unit is further configured to, when the RF circuit operates in a Carrier Aggregation (CA) mode, control the switching unit to enable the first transmission link and the second transmission link, and when the RF circuit operates in a non-CA mode, control the switching module to enable the first transmission link or the second transmission link.
